# EUROPEAN PATENT SPECIFICATION

(11) **EP 3 952 614 B1**
(45) Date of publication and mention of the grant of the patent: **11.12.2024**
(21) Application number: 19922752.1
(22) Date of filing: 31.12.2019
(51) Int. Cl.: H05B 45/345, H05B 45/44, H05B 45/50

(54) **ALTERNATING CURRENT SOURCE DIRECT DRIVING LED LIGHTING DEVICE**
GLEICHSTROMQUELLE MIT DIREKTANTRIEB
DISPOSITIF D'ÉCLAIRAGE À DEL À COMMANDE DIRECTE DE SOURCE DE COURANT ALTERNATIF

(30) Priority: 29.03.2019 KR 20190036766
(43) Date of publication of application: 09.02.2022
(73) Proprietor: ISLT CO., LTD., Asan-si, Chungcheongnam-do 31417 (KR)
(72) Inventor: Gong, Myeong-Kook, Yongin-si, Gyeonggi-do 16930 (KR); Gong, Da-Young, Yongin-si, Gyeonggi-do 16930 (KR)
(74) Representative: Gulde & Partner
(86) International application number: PCT/KR2019/018768
(87) International publication number: WO 2020/204315

(56) References cited:
- WO-A1-2015/068978
- WO-A1-2015/068978
- CN-A- 108 347 801
- JP-A- 2010 079 377
- KR-A- 20130 091 461
- KR-A- 20130 091 461
- KR-A- 20160 071 827
- KR-A- 20160 071 827
- KR-A- 20180 071 293
- KR-A- 20180 071 293
- US-A1- 2013 049 597
- US-A1- 2014 346 959
- US-A1- 2014 346 959
- US-A1- 2016 029 447

## Description

### [Technical Field]

The present disclosure relates to an LED lighting device and particularly, to an alternating current (AC) source direct driving LED lighting device which enables a stable charging/discharging operation of an LED driving lighting device by minimizing the number of connection lines between a light emitting unit and a current driving unit and reducing the number of LED arrays in the light emitting unit without reducing power conversion efficiency.

### [Background Art]

Generally, a light emitting diode (LED) is an optoelectronic device which has a bonding structure of P-type and N-type semiconductors and applies voltage to emit light with energy corresponding to a band gap of the semiconductor by binding of electrons and holes.

In particular, in the LED, the reaction time is, faster than a general bulb, and the power consumption is lowered at about 20% of a lighting device such as a conventional fluorescent lamp, and as a result, recently, the LED has been used in various aspects, including a high-efficiency lighting means.

A floodlighting using such an LED uses, as a light source, a module of assembling a plurality of high-luminance LEDs or power LEDs driven by an alternating current (AC) power source on a substrate.

In order to drive the LED from the AC source, a switching mode power supply (SMPS) was frequently used in the related art.

However, the structure switches high current to a high frequency so that the current flows through an inductor to generate electromagnetic waves and induce an electro-magnetic interference (EMI).

For this reason, the SMPS requires a predetermined filter circuit consisting of an input terminal and an inductor and a capacitor which are elements capable of storing energy between the LED and the switching unit, so as to prevent the generated high frequency power from being transmitted to an AC input stage wire.

Further, when the frequency of generated electromagnetic waves is gradually increasing, in some cases, since electric waves above a standard scale occur to be transmitted to a space, the electric waves are also shielded by using a metal case.

For this reason, the SMPS for driving the LED has problems that a circuit is complicated, a volume is increased, and manufacturing cost is increased.

Recently, in order to solve the problems, an AC voltage direct connection type LED driving circuit with a simple circuit and a low operation frequency is configured on the same PCB substrate as the LED to be frequently used as a low-price product.

However, the AC voltage direct connection type LED driving method still needs to improve many functions.

Generally, the AC voltage direct connection type LED driving device is configured by an AC source, a rectification unit, an LED, a switch element, and a current control resistor.

The control of power is performed by the current control resistor.

When the size of the current control resistor increases, the power decreases, and when the size of the current control resistor decreases, the power increases.

The switch element for configuring the AC voltage direct connection type LED driving device has three types of a serial type, a parallel type, and a current multiple type according to a connection method with the LED.

A first type switch element, a serial type switch element is connected in series to a negative (-) terminal of the LED array, and when the switch is On, the LED is lighted on and when the switch is Off, the LED is lighted off.

A second type switch element, a parallel type switch element is connected in parallel to both ends of the LED array, and when the switch is On, the LED is lighted off and when the switch is Off, the LED is lighted on.

While the AC voltage is lower than the voltage of a first LED array, the LED is lighted off.

While the AC voltage is higher than the voltage of the first LED array, the LED is lighted on.

When the AC voltage is higher than the sum of the voltages of the first and second LED arrays, the first and second LED arrays are lighted on.

The LED arrays are lighted on sequentially as the AC voltage is further increased.

As described above, there is a problem that when the serial and parallel type switch elements are disposed by the number of LED arrays in a general manner, the LED arrays are lighted on sequentially.

In order to solve the problems, when more switch elements than the number of LED arrays are appropriately added and disposed, in an AC voltage of the LED array voltage or more, all LED arrays may be simultaneously lighted on.

Such a simultaneous lighting method has a very good illuminance uniformity characteristic at the time of dimming.

Here, the uniformity characteristic means a uniformity ratio of luminance characteristic, and in the case of a conventional sequential lighting method other than the simultaneous lighting method, the uniformity is significantly lowered to 60% to 70% due to a deviation of lightings between the LED arrays.

In the simultaneous lighting method, there are a case of using only the parallel type switch element and a case of mixing and using the parallel and serial type switch elements.

However, in the case of using the series type switch element, even if the current control resistor is disposed at only one place, the switch element can be operated, but in the case of using the parallel type switch element, the current control resistor needs to be disposed for each switch element.

In order to solve the problem of disposing the current control resistors at many places in this way, there is a current multiple switch element, which is a third type switch element.

The current multiple switch element is an element which has a function of sensing when the current of the corresponding LED array flows to the series type switch element and allowing a desired multiple of current to flow from a positive (+) terminal of the corresponding LED array to a positive (+) terminal of the next LED array.

By using the current multiple switch element, the current may be branched to each LED array so as to be proportional to the current to be controlled in the series type switch element as a resistor disposed to control the current of the series type switch element.

However, when the AC voltage fluctuates or a voltage used by each country or region varies, there is a limit to newly design this device considering an actually used voltage.

Since two or more voltages are generally used for each country, two or more of products having different rated voltages are required.

The general range of the AC voltage for each country is 100 V to 277 V.

However, confoundingly, when installing a TRIAC dimmer with LEDs or an LED lighting device using a 0 to 10 V dimmer, electronic devices, electrical equipment, etc., there was a risk that safety problems such as overheating, destruction, and fire were caused by malfunction.

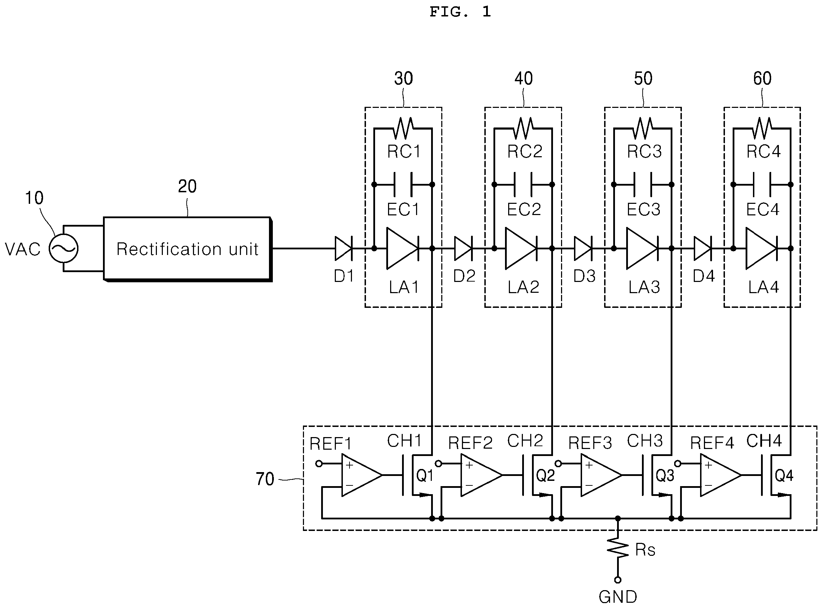

FIG. 1 is a circuit diagram of a 120 V alternating current (AC) source direct driving LED lighting device according to the related art, which includes an AC source 10, a rectification unit 20, first to fourth light emitting units 30 to 60, and a current driving unit 70.

The first light emitting unit 30 includes a first LED array LA1, a first electrolytic capacitor EC1, a first discharge resistor RC1, and the second light emitting unit 40 includes a second LED array LA2, a second electrolytic capacitor EC2, and a second discharge resistor RC2.

Further, the third light emitting unit 50 includes a third LED array LA3, a third electrolytic capacitor EC3, and a third discharge resistor RC3, and the fourth light emitting unit 60 includes a fourth LED array LA4, a fourth electrolytic capacitor EC4 and a fourth discharge resistor RC4.

FIG. 2 is a graph showing waveforms as a result of simulating an input current of the LED lighting device illustrated in FIG. 1 and currents flowing in the first to third LED arrays LA1 to LA3.

FIG. 3 is a graph showing waveforms as a result of simulating an input current in the LED lighting device illustrated in FIG. 1, a current flowing in the first LED array LA1, and a current flowing in a first channel CH1.

Referring to FIGS. 1 to 3, an operation of the 120 V AC source direct driving LED lighting device according to the related art will be schematically described as follows.

Since the AC voltage direct connection type LED driving device is a linear type, power efficiency depends on a ratio of pitch values of an entire serial voltage and a AC source voltage of the LED.

Usually, the entire serial voltage of the LED is used to be set to about 80% voltage of the AC source voltage.

In addition, in order to increase light efficiency and improve electrical characteristics such as a power factor, an integrated circuit (IC) for implementing this has been usually used by four channels.

In this case, in intermediate terminals of the serially connected LEDs, three connection lines are made to operate by connecting a total of four terminals including a negative [-] terminal of the LED which is the last terminal to the channels of the integrated circuit.

That is, as illustrated in FIG. 1, when a rectified AC voltage |VAC| is applied to the four light emitting units 30 to 60, four channels CH1, CH2, CH3, and CH4 are formed through first to fourth field effect transistors Q1 to Q4.

To drive the four channels CH1, CH2, CH3, and CH4, output terminals of first to fourth comparators in which reference voltages REF1, REF2, REF3, and REF4 are gradually increased are connected to gate terminals of the first to fourth field effect transistors Q1, Q2, Q3, and Q4, respectively.

The electrolytic capacitor EC1 is connected in parallel to the LED array LA1 for a flicker reduction of the LED array LA1, and the electrolytic capacitors EC2, EC3, and EC4 are connected in parallel to the LED arrays LA2, LA3, and LA4 to replace the LED arrays LA2, LA3, and LA4, respectively.

Resistors RC1, RC2, RC3, and RC4 become discharge resistors which are discharge paths together with the capacitors EC1, EC2, EC3, and EC4 when the AC source is shut off.

Diodes D1, D2, D3, and D4 electrically isolate four parallel-connected light emitting units 30 to 60 from each other.

In the current control resistor RS, one side is connected to a source terminal of each of the first to fourth field effect transistors Q1, Q2, Q3, and Q4 and the other side is grounded to control a source current of the first to fourth field effect transistors Q1, Q2, Q3, and Q4.

However, in this way, a total of five connection lines including a LED[+] terminal are required to separately drive the light emitting units 30 to 60 including the LEDs and the current driving unit 70.

Also, in the case of connecting the capacitors with the LEDs in parallel to improve a flicker characteristic, since each of the LED arrays LA1, LA2, LA3, and LA4 needs to be electrically separated from the diode, there were problems that total eight connection lines are required to increase a volume and a position relation of the connection lines is complicated, so that it is difficult to assemble components.

Therefore, in this aspect, in order to decrease the volume and facilitate the component assembling in the power supply device of the LED driving lighting device, it is preferred to minimize the number of connection lines between the light emitting units 30 to 60 and the current driving unit 70.

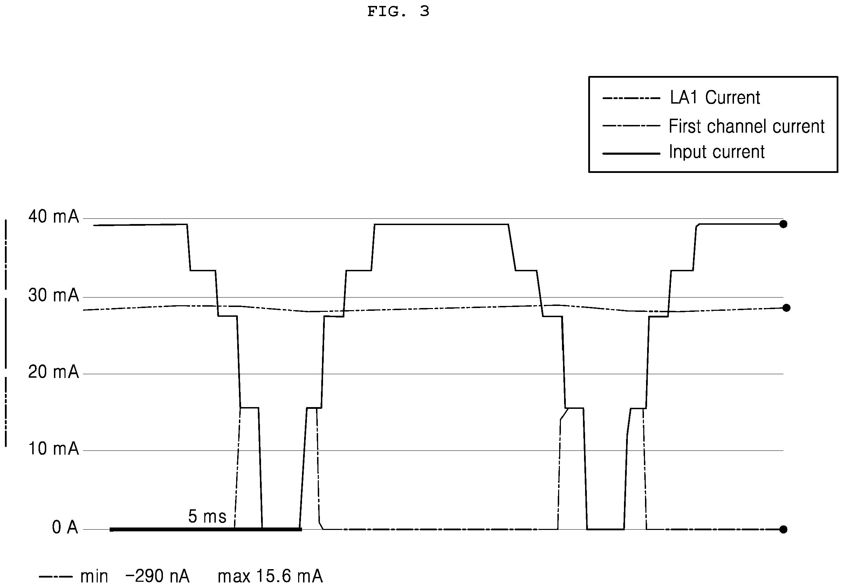

Meanwhile, in a conventional AC source direct driving LED lighting device, as illustrated in FIG. 3, as four LED arrays LA1, LA2, LA3, and LA4 are configured, an input current variation step is formed by four steps.

Further, it can be seen that the LED current is distributed for each array of three 36 V LED arrays LA1, LA2, and LA3 to have a difference in current level of each array, but is lower than the input current.

The total LED power is a value of summing the product of the voltage of each of the LED arrays LA1, LA2, LA3, and LA4 and the current of each of the LED arrays LA1, LA2, LA3, and LA4, wherein it can be seen that the current of the first channel CH1 is lower than the currents of the three LED arrays LA1, LA2, and LA3.

As a result, there was a problem that during discharging through the path of the first channel CH1, an operation of the second to fourth electrolyte capacitors EC2, EC3, and EC4 in which charges which have been charged need to be discharged at a short time is not normally performed.

Also, US 2016/0029447 Al is directed to a lighting device comprising a first current control circuit and a charging current control circuit. Additionally, CN 108 347 801 A discloses an AC source direct driven LED array comprising charge/discharge units, discharge path and current drive units being active in dependence to the AC voltage level.

### [Disclosure]

### [Technical Problem]

An object of the present disclosure is to provide an AC source direct driving LED lighting device capable of minimizing the number of connection lines between a light emitting unit and a current driving unit to decrease the volume of a power supply device of the LED driving lighting device and facilitate the component assembling.

Further, another object of the present disclosure is to provide an AC source direct driving LED lighting device capable of stably performing a charging/discharging operation of the LED driving lighting device by decreasing the number of LED arrays in the light emitting unit without reduction of power conversion efficiency.

### [Technical Solution]

According to an embodiment of the present invention, an AC source direct driving LED lighting device according to claim 1 is provided.

According to an alternative embodiment of the invention, the discharge LED path unit includes a first diode of which an anode terminal is connected to one side of the second electrolytic capacitor and a cathode terminal is connected to the light emitting unit to form a path of discharging the voltage, which has been charged in the second electrolytic capacitor, to the light emitting unit; a second diode of which an anode terminal is connected to one side of the third electrolytic capacitor and a cathode terminal is connected to the light emitting unit to form a path of discharging the voltage, which has been charged in the third electrolytic capacitor, to the light emitting unit; and a third diode of which an anode terminal is connected to one side of the fourth electrolytic capacitor and a cathode terminal is connected to the light emitting unit to form a path of discharging the voltage, which has been charged in the fourth electrolytic capacitor, to the light emitting unit.

The current driving unit may include a first channel current driving unit which receives the adjusted first constant current from the light emitting unit through a first transistor to control the driving of the current of the first channel according to an opening/closing of the first transistor depending on the control of a first comparator; a second channel current driving unit which receives the current from the first channel isolation diode through a second transistor to control the driving of the current of the second channel according to an opening/closing of the second transistor depending on the control of a second comparator; a third channel current driving unit which receives the current from the second channel isolation diode through a third transistor to control the driving of the current of the third channel according to an opening/closing of the third transistor depending on the control of a third comparator; and a fourth channel current driving unit which receives the current from the third channel isolation diode through a fourth transistor to control the driving of the current of the fourth channel according to an opening/closing of the fourth transistor depending on the control of a fourth comparator.

The specific details of other embodiments are included in the "the detailed description of the invention" and the accompanying "drawings".

Advantages and/or features of the present disclosure, and methods for achieving the advantages and/or features will be apparent with reference to embodiments to be described below in detail together with the accompanying drawings.

However, the present disclosure is not limited only to a configuration of each embodiment to be disclosed below, but may also be implemented in various different forms. The respective embodiments disclosed in this specification are provided only to complete disclosure of the present disclosure and to fully provide those skilled in the art to which the present disclosure pertains with the category of the invention, and the present disclosure will be defined only by the scope of each claim of the claims.

### [Advantageous Effects]

According to the present disclosure, there is no need to switch a high current at a high frequency so that a current flows through an inductor, and as a result, as an electromagnetic wave interference phenomenon is prevented, a filter circuit for filtering the high frequency becomes unnecessary.

Further, since a deviation of the lighting-on between LED arrays is removed as compared to the conventional sequential lighting method, the uniformity of the LED lighting is remarkably improved.

### [BRIEF DESCRIPTION OF THE DRAWINGS]

FIG. 1 is a circuit diagram of a 120 V AC source direct driving LED lighting device according to the related art;

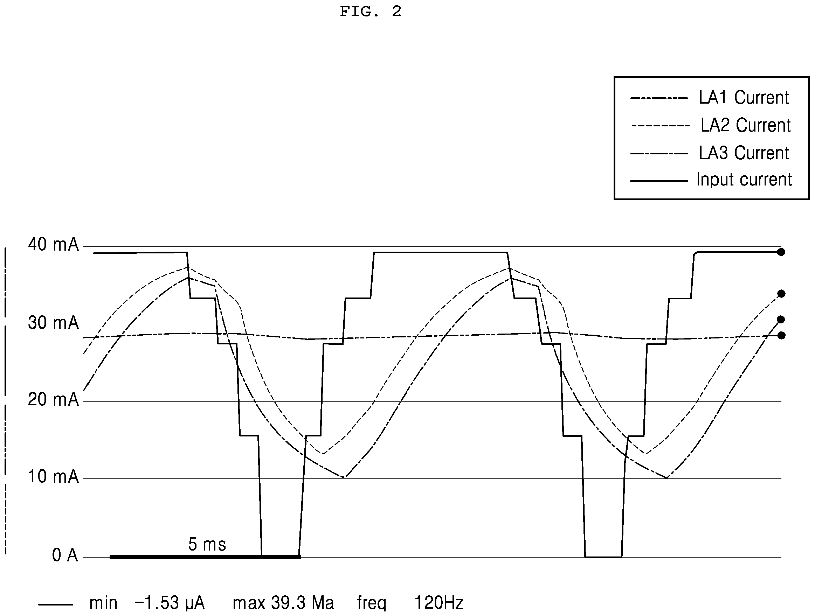

FIG. 2 is a graph showing waveforms as a result of simulating an input current of the LED lighting device illustrated in FIG. 1 and currents flowing in first to third LED arrays LA1 to LA3;
FIG. 3 is a graph showing waveforms as a result of simulating an input current in the LED lighting device illustrated in FIG. 1, a current flowing in a first LED array LA1, and a current flowing in a first channel CH1;

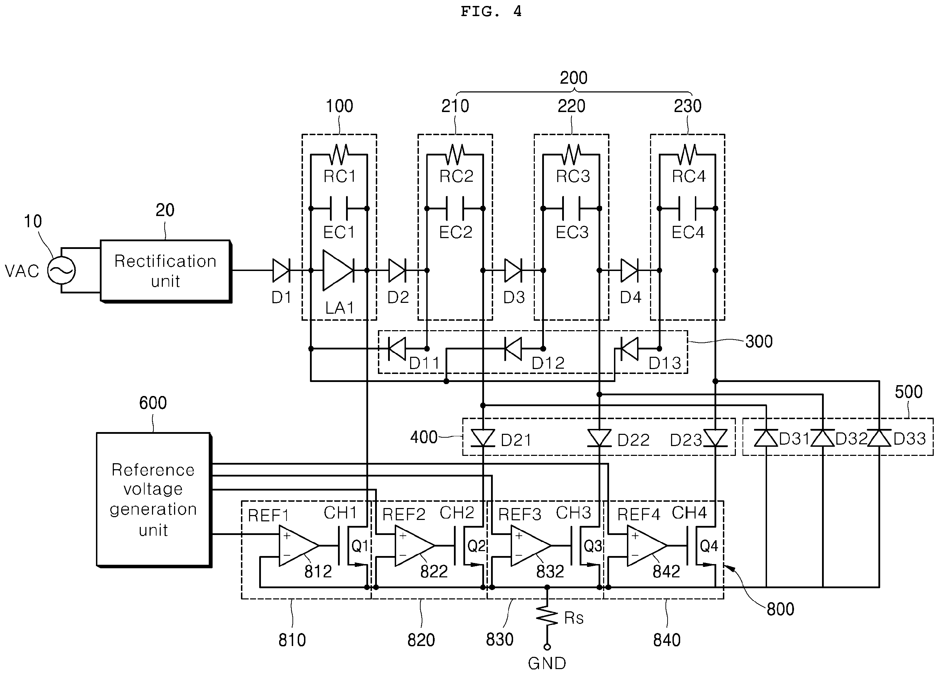

FIG. 4 is a circuit diagram of a 120 V AC source direct driving LED lighting device according to the present disclosure;

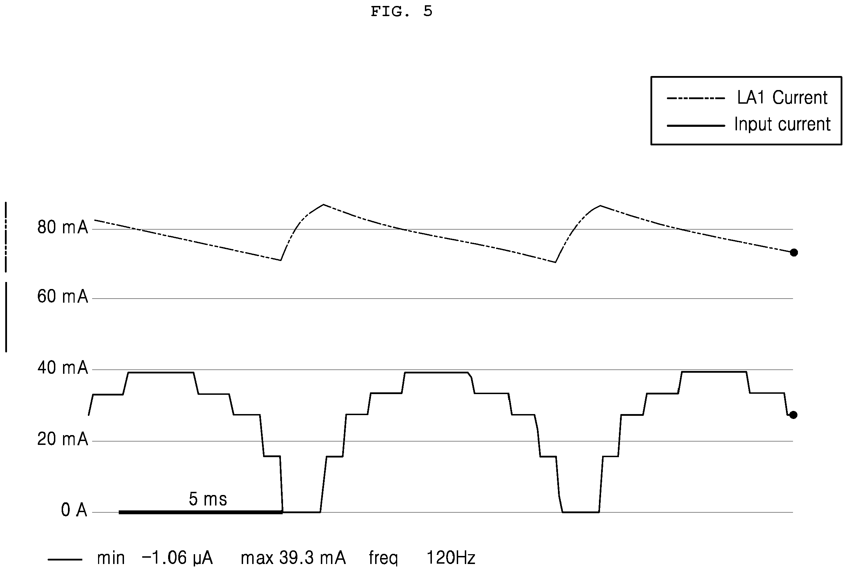

FIG. 5 is a graph showing waveforms as a result of simulating an input current of the LED lighting device illustrated in FIG. 4 and a current flowing in a first LED array LA1; and

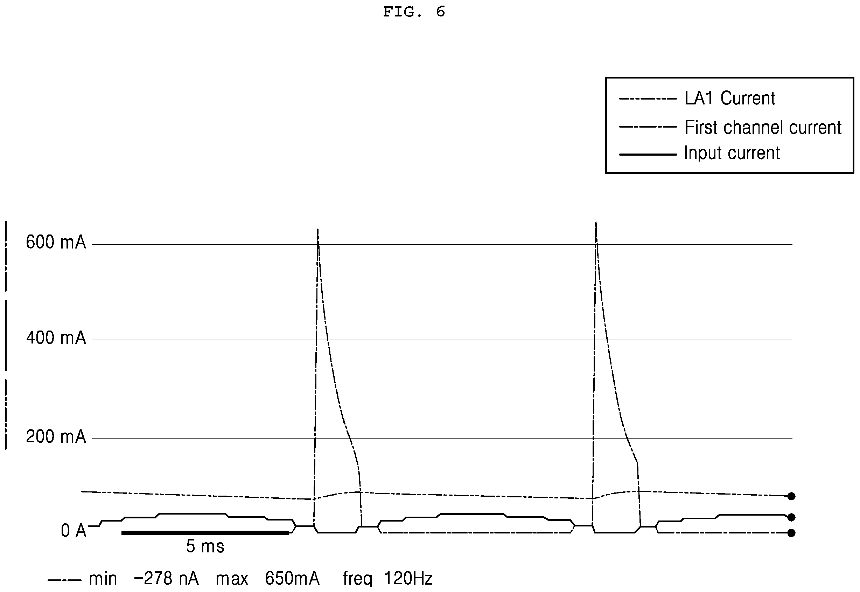

FIG. 6 is a graph showing waveforms as a result of simulating an input current in the LED lighting device illustrated in FIG. 4, a current flowing in the first LED array LA1, and a current flowing in a first channel CH1.

### [DETAILED DESCRIPTION OF THE PREFERRED EMBODIMENT]

Hereinafter, preferred embodiments of the present disclosure will be described below in detail with reference to the accompanying drawings.

Before describing the present disclosure in detail, the terms or words used herein should not be constructed to be unconditionally limited by conventional or dictionary meanings, and in order to explain the present disclosure of the present inventors by the best method, the concepts of various terms can be appropriately defined and used.

Furthermore, it should be noted that these terms or words should be interpreted as meanings and concepts according to the technical ideas of the present disclosure.

That is, the terms used herein are used to describe preferred embodiments of the present disclosure, but are not used so as to specifically limit the contents of the present disclosure.

It should be noted that these terms are defined in consideration of various possibilities of the present disclosure.

Further, in this specification, the singular expression may include a plural expression, unless otherwise indicated in the context clearly.

Similarly, it should be noted that even if the plural expression is made, a single meaning may be included.

Throughout this specification, when a component is described as "including" the other component, the component does not exclude any other component, but may further include any other component unless otherwise indicated in contrary.

Furthermore, if it is described that a component is "present inside, or connected and installed with" the other component, the component may be directly connected or contacted and installed with the other component.

Further, a component may also be installed to be spaced apart from the other component at a constant distance, and when the component is installed to be spaced apart from the other component with a constant distance, a third component or mean may be present to fix and connect the corresponding component to the other component.

Meanwhile, it should be noted that the description of the third component or means may also be omitted.

On the contrary, when it is described that a component is "directly connected to" or "directly accesses" the other component, it should be understood that a third component or means does not exist.

Similarly, other expressions describing a relationship between components, that is, expressions such as "between" and "directly between" or "adjacent to" and "directly adjacent to" should be similarly interpreted.

In addition, in the specification, the terms such as "one surface", "the other surface", "one side", "the other side", "first", "second", etc., are used to clearly distinguish one component from the other component with respect to one component.

However, it should be noted that the meaning of the corresponding component is not limited by these terms.

In addition, in this specification, when the terms related to locations such as "upper", "lower", "left", and "right" are used, it should be understood that the corresponding component represents a relative position in the corresponding drawing.

In addition, it is not understood that so long as an absolute location is not specified for these locations, the terms related to these locations refer to an absolute location.

Furthermore, in the specification of the present disclosure, if the terms such as "unit", "er", "module", and "device" are used, the terms mean a unit capable of processing one or more functions or operations.

It should be noted that the present disclosure may be implemented by hardware or software, or a combination of hardware or software.

In the drawings appended to this specification, a size, a location, a coupling relationship, etc. of each component constituting the present disclosure may be described while being partially exaggerated, reduced, or omitted for the sake of clarity or for the convenience of description, and thus, the proportion or scale thereof may not be exact.

Further, hereinafter, in the following description of the present disclosure, a detailed description of a configuration determined to unnecessarily obscure the subject matter of the present disclosure, for example, a known technology including the related art may also be omitted.

FIG. 4 is a circuit diagram of a 120 V AC source direct driving LED lighting device according to the present disclosure. The AC source direct driving LED lighting device includes an AC source 10, a rectification unit 20, a light emitting unit 100, a charging/discharging unit 200, first to fourth isolation diodes D1 to D4, a discharge LED path unit 300, a channel isolation unit 400, a discharge capacitor path unit 500, a reference voltage generation unit 600, a current driving unit 800, and a current control resistor RS.

The light emitting unit 100 includes an LED array LA1, a first electrolytic capacitor EC 1, and a first discharge resistor RC1, and the charging/discharging unit 200 includes first to third charging/discharging units 210, 220, and 230.

The first charging/discharging unit 210 includes a second electrolytic capacitor EC2 and a second discharge resistor RC2, the second charging/discharging unit 220 includes a third electrolytic capacitor EC3 and a third discharge resistor RC3, and the third charging/discharging unit 230 includes a fourth electrolytic capacitor EC4 and a fourth discharge resistor RC4.

The current driving unit 800 includes first to fourth channel current driving units 810 to 840.

The first channel current driving unit 810 includes a first comparator 812 and a first transistor Q1, the second channel current driving unit 820 includes a second comparator 822 and a second transistor Q2, the third channel current driving unit 830 includes a third comparator 832 and a third transistor Q3, and the fourth channel current driving unit 840 includes a fourth comparator 842 and a fourth transistor Q4.

FIG. 5 is a graph showing waveforms as a result of simulating an input current of the LED lighting device illustrated in FIG. 4 and a current flowing in a first LED array LA1.

FIG. 6 is a graph showing waveforms as a result of simulating the input current in the LED lighting device illustrated in FIG. 4, the current flowing in the first LED array LA1, and a current flowing in a first channel CH1.

Referring to FIGS. 4 to 6, the structure and functions of each component of the AC source direct driving LED lighting device according to the present disclosure will be schematically described below.

The rectification unit 20 receives and rectifies an AC voltage from the AC source 10 to output a rectified AC voltage |VAC|.

The light emitting unit 100 receives the rectified AC voltage |VAC| from the rectification unit 20 and adjusts a first constant current to emit the LED array LA1.

That is, the constant current is adjusted by the charge/discharge operation of the first electrolytic capacitor EC1 embedded in the light emitting unit 100 to emit the LED array LA1 connected in parallel with the first electrolytic capacitor EC1.

The charging/discharging unit 200 receives the adjusted first constant current from the light emitting unit 100 to be adjusted to the second to fourth constant currents and charges/discharges the second to fourth electrolytic capacitors EC2, EC3, and EC4 embedded therein, respectively.

At this time, the LED array LA1 stabilizes a driving operation of the AC source direct driving LED lighting device by a stable charging/discharging operation of the first to fourth electrolytic capacitors EC1, EC2, EC3, and EC4 embedded in the light emitting unit 100 and the first to third charging/discharging units 210, 220, and 230, respectively.

The first to fourth discharge resisters RC1, RC2, RC3, and RC4 embedded in the light emitting unit 100 and the charging/discharging unit 200 become discharge paths together with the first to fourth electrolytic capacitors EC1, EC2, EC3, and EC4 when the AC power is shut off the AC source 10.

The first to fourth isolation diodes D1, D2, D3, and D4 electrically isolate the light emitting unit 100 and the first to third charging/discharging units 210, 220, and 230, which are connected to each other in parallel, from each other, respectively

The first to third diodes D11, D12, and D 13 in the discharge LED path unit 300 form paths of discharging the voltages which have been charged in the second to fourth electrolytic capacitors EC2, EC3, and EC4 by parallel connection of the first LED array LA1 and the first electrolytic capacitor EC1 in the light emitting unit 100.

The first to third channel isolation diodes D21, D22, and D23 in the channel isolation unit 400 form paths through which the current flows through the second to fourth channels CH2, CH3, and CH4 and electrically isolate the second to fourth electrolytic capacitors EC2, EC3, and EC4 from the second to fourth channels CH2, CH3, and CH4 when discharging the second to fourth electrolytic capacitors EC2, EC3, and EC4, respectively, to prevent the flow of a reverse current in the second to fourth channels CH2, CH3, and CH4.

The first to third discharge path diodes D31, D32, and D33 in the discharge capacitor path unit 500 form discharge paths from the second to fourth electrolytic capacitors EC2, EC3, and EC4 to the first channel CH1 when the second to fourth channels CH2, CH3, and CH4 are isolated.

The current driving unit 800 receives the first to fourth constant currents adjusted from the light emitting unit 100 and the charging/discharging unit 200, respectively, to form four channels CH1, CH2, CH3, and CH4 through a turn-on operation of the embedded first to fourth field effect transistors Q1 to Q4 and controls the current transfer according to an opening/closing operation.

One side of the current control resistor RS is commonly connected to a source terminal of the first to fourth field effect transistors Q1 to Q4 and the other side thereof is grounded to control the current amount of the current driving unit 800.

The reference voltage generation unit 600 generates and outputs first to fourth reference voltages REF1, REF2, REF3, and REF4 which gradually increase.

At this time, in a gate terminal of each of the first to fourth field effect transistors Q1 to Q4, the first to fourth reference voltages REF1, REF2, REF3, and REF4 are connected to output terminals of the first to fourth comparators 810 to 840, respectively, so that the first to fourth field effect transistors Q1 to Q4 are turned on.

That is, when the first to fourth reference voltages REF1, REF2, REF3, and REF4 are larger than a terminal voltage of the current control resistor RS, the first to fourth comparators 810 to 840 output '1', so that the first to fourth field effect transistors Q1 to Q4 are turned on.

Referring to FIGS. 4 to 6, the structure and functions of each component of the light emitting unit 100 in the LED lighting device for preventing a flicker according to the present disclosure will be described below in detail.

One side of the first electrolytic capacitor EC1 is connected to a cathode terminal of the first isolation diode D1 and the other side thereof is connected to an anode terminal of the second isolation diode D2 to charge a first charge.

The first discharge resistor RC1 is connected to the first electrolytic capacitor EC1 in parallel to discharge the charged first charge.

The LED array LA1 includes a plurality of LEDs (not illustrated) and receives the rectified AC voltage |VAC| from the rectification unit 20 to emit light.

Referring to FIGS. 4 to 6, the structure and functions of each component of the first to third charging/discharging units 210 to 230 in the LED lighting device for preventing a flicker according to the present disclosure will be described below in detail.

One side of the second electrolytic capacitor EC2 is connected to a cathode terminal of the second isolation diode D2 to charge a second charge.

The second discharge resistor RC2 is connected to the second electrolytic capacitor EC2 in parallel to discharge the charged second charge.

One side of the third electrolytic capacitor EC3 is connected to a cathode terminal of the third isolation diode D3 to charge a third charge.

The third discharge resistor RC3 is connected to the third electrolytic capacitor EC3 in parallel to discharge the charged third charge.

One side of the fourth electrolytic capacitor EC4 is connected to a cathode terminal of the fourth isolation diode D4 to charge a fourth charge.

The fourth discharge resistor RC4 is connected to the fourth electrolytic capacitor EC4 in parallel to discharge the charged fourth charge.

Referring to FIGS. 4 to 6, the structure and functions of each component of the discharge LED path unit 300 in the LED lighting device for preventing the flicker according to the present disclosure will be described below in detail.

The first diode D11 has an anode terminal connected to one side of the second electrolytic capacitor EC2 and a cathode terminal connected to the light emitting unit 100 to form a path of discharging the voltage, which has been charged in the second electrolytic capacitor EC2, by parallel connection of the first LED array LA1 and the first electrolytic capacitor EC1 in the light emitting unit 100.

The second diode D12 has an anode terminal connected to one side of the third electrolytic capacitor EC3 and a cathode terminal connected to the light emitting unit 100 to form a path of discharging the voltage, which has been charged in the third electrolytic capacitor EC3, by parallel connection of the first LED array LA1 and the first electrolytic capacitor EC1 in the light emitting unit 100.

The third diode D13 has an anode terminal connected to one side of the fourth electrolytic capacitor EC4 and a cathode terminal connected to the light emitting unit 100 to form a path of discharging the voltage, which has been charged in the fourth electrolytic capacitor EC4, by parallel connection of the first LED array LA1 and the first electrolytic capacitor EC1 in the light emitting unit 100.

Referring to FIGS. 4 to 6, the structure and functions of each component of the channel isolation unit 400 in the LED lighting device for preventing the flicker according to the present disclosure will be described below in detail.

The first channel isolation diode D21 has an anode terminal connected to the other side of the second electrolytic capacitor EC2 and a cathode terminal connected to an input terminal of the current driving unit 800 to electrically isolate the second electrolytic capacitor EC2 from the second channel CH2 when discharging the second electrolytic capacitor EC2, thereby preventing the flow of a reverse current of the second channel CH2.

The second channel isolation diode D22 has an anode terminal connected to the other side of the third electrolytic capacitor EC3 and a cathode terminal connected to an input terminal of the current driving unit 800 to electrically isolate the third electrolytic capacitor EC3 from the third channel CH3 when discharging the third electrolytic capacitor EC3, thereby preventing the flow of a reverse current of the third channel CH3.

The third channel isolation diode D23 has an anode terminal connected to the other side of the fourth electrolytic capacitor EC4 and a cathode terminal connected to an input terminal of the current driving unit 800 to electrically isolate the fourth electrolytic capacitor EC4 from the fourth channel CH4 when discharging the fourth electrolytic capacitor EC4, thereby preventing the flow of a reverse current of the fourth channel CH4.

Referring to FIGS. 4 to 6, the structure and functions of each component of the discharge capacitor path unit 500 in the LED lighting device for preventing the flicker according to the present disclosure will be described below in detail.

The first discharge path diode D31 has a cathode terminal connected to the other side of the second electrolytic capacitor EC2 and an anode terminal connected to an output terminal of the current driving unit 800 to form a discharge path to the first channel CH1 from the second electrolytic capacitor EC2 when the second to fourth channels CH2, CH3, and CH4 have been isolated.

The second discharge path diode D32 has a cathode terminal connected to the other side of the third electrolytic capacitor EC3 and an anode terminal connected to an output terminal of the current driving unit 800 to form a discharge path to the first channel CH1 from the third electrolytic capacitor EC3 when the second to fourth channels CH2, CH3, and CH4 have been isolated.

The third discharge path diode D33 has a cathode terminal connected to the other side of the fourth electrolytic capacitor EC4 and an anode terminal connected to an output terminal of the current driving unit 800 to form a discharge path to the first channel CH1 from the fourth electrolytic capacitor EC4 when the second to fourth channels CH2, CH3, and CH4 have been isolated.

Referring to FIGS. 4 to 6, the structure and functions of each component of the current driving unit 800 in the LED lighting device for preventing the flicker according to the present disclosure will be described below in detail.

The first channel current driving unit 810 receives the adjusted first constant current from the light emitting unit 100 to control the driving of the current of the first channel CH1 according to an opening/closing of the first transistor Q1 depending on the control of the first comparator 812.

The second channel current driving unit 820 receives a current from the first channel isolation diode D21 in the channel isolation unit 400 to control the driving of the current of the second channel CH2 according to an opening/closing of the second transistor Q2 depending on the control of the second comparator 822.

The third channel current driving unit 830 receives a current from the second channel isolation diode D22 in the channel isolation unit 400 to control the driving of the current of the third channel CH3 according to an opening/closing of the third transistor Q3 depending on the control of the third comparator 832.

The fourth channel current driving unit 840 receives a current from the third channel isolation diode D23 in the channel isolation unit 400 to control the driving of the current of the fourth channel CH4 according to an opening/closing of the fourth transistor Q4 depending on the control of the fourth comparator 842.

Referring to FIGS. 4 to 6, an operation of the AC source direct driving LED lighting device according to an embodiment of the present disclosure will be described below in detail.

The LED lighting device of the present disclosure stabilizes a driving operation of the AC source direct driving LED lighting device by the following stabilized charging and discharging operation through an intermediate operation in which the AC power is applied to charge an electrolytic capacitor ECj (j = 1 to 4).

That is, when the rectified AC voltage is applied from the AC source 10, the current flows through the second to fourth channels CH2, CH3, and CH4 of the integrated circuit to be charged in the second to fourth electrolytic capacitors EC2, EC3, and EC4, respectively.

In addition, when the applied AC voltage is lower than the voltage of any one of the second to fourth electrolytic capacitors EC2, EC3, and EC4 connected with the positive (+) terminal of the first LED array LA1 through the second to fourth diodes D2, D3, and D4, the electrolytic capacitors charged with a voltage higher than the voltage of the first LED array LA1 are discharged through the first LED array LA1 and the first electrolytic capacitor EC1 connected therewith in parallel.

At this time, the discharging of the second electrolytic capacitor EC2 occurs through a path of the first discharge path diode D31 in the discharge capacitor path unit 500 - the second electrolytic capacitor EC2 - the first diode D11 in the discharge LED path unit 300 - (parallel connection of the first LED array LA1 and the first electrolytic capacitor EC1) - the first channel CH1 - the first discharge path diode D31 in the discharge capacitor path unit 500.

The discharging of the third electrolytic capacitor EC3 occurs through a path of the second discharge path diode D32 in the discharge capacitor path unit 500 - the third electrolytic capacitor EC3 - the second diode D12 in the discharge LED path unit 300 - (parallel connection of the first LED array LA1 and the first electrolytic capacitor EC1) - the first channel CH1 - the second discharge path diode D32 in the discharge capacitor path unit 500.

The discharging of the fourth electrolytic capacitor EC4 occurs through a path of the third discharge path diode D33 in the discharge capacitor path unit 500 - the fourth electrolytic capacitor EC4 - the third diode D13 in the discharge LED path unit 300 - (parallel connection of the first LED array LA1 and the first electrolytic capacitor EC1) - the first channel CH1 - the third discharge path diode D33 in the discharge capacitor path unit 500.

Accordingly, all of the second to fourth electrolytic capacitors EC2, EC3, and EC4 are discharged while being parallel-connected with the first LED array LA1 to be equal to the voltage of the first LED array LA 1.

Thereafter, when the applied AC voltage is increased to be higher than the voltage of the first LED array LA1, the current flows through the first channel CH1, and when the applied AC voltage is twice larger than the voltage of the first LED array LA1, the current flows through the second channel CH2.

The second electrolytic capacitor EC2 causes a voltage increase as the following Equation while the current flows. (Increased voltage of second electrolytic capacitor EC2 by current of second channel CH2) = (Current of second channel CH2) X (Turn-on time of second channel CH2)/(Capacitance of second electrolytic capacitor EC2)

Further, when the applied AC voltage is increased to become 3 x (voltage of first LED array LA1) + (increased voltage of second electrolytic capacitor EC2 by current of second channel CH2) or more, the current flows to the third channel CH3, and at this time, both the second electrolytic capacitor EC2 and the third electrolytic capacitor EC3 are more increased in voltage than before.

Similarly, since the voltage is lowered after the current flows to the fourth channel CH4 through the fourth electrolytic capacitor EC4, the voltage of the electrolytic capacitor is increased while the current flows again in the order of the third channel CH3, the second channel CH2, and the first channel CH1.

However, the discharging of the second to fourth electrolytic capacitors EC2, EC3, and EC4 occurs again through the process to perform a stable operation by repeating an operation in which the voltage of the second to fourth electrolytic capacitors EC2, EC3, and EC4 is the same as the voltage of the first LED array LA1.

Accordingly, the degree in which the voltage of the second to fourth electrolytic capacitors EC2, EC3, and EC4 is higher than the voltage of the first LED array LA1 is determined by the capacitance and a product of the current of the second to fourth channels CH2, CH3, and CH4 and the time to be designed at a desired level.

Further, since the voltage of the second to fourth electrolytic capacitors EC2, EC3, and EC4 is almost the same as the voltage of the first LED array LA1 only when the charges charged in the second to fourth electrolytic capacitors EC2, EC3, and EC4 should be discharged at a short time during discharging through the parallel connection of the first LED array LA1 and the first electrolytic capacitor EC1 - the path of the first channel CH1, the current driving capability of the first channel CH1 should be very large.

The first channel CH1 performs a normal operation only when satisfying a current capacity or more such as the following Equation. Current capacity of first channel CH1 > (Sum of average charge amounts filled in second to fourth electrolytic capacitors EC2, EC3, and EC4/(Discharge time)

Here, the discharge time is part of the time when the input current is '0', that is, the AC source 10 is shut off.

Meanwhile, as illustrated in FIG. 6, by configuring four stages of the first LED array LA1 and the first to third charging/discharging units 210, 220, and 230, the present disclosure is the same as the conventional AC source direct driving LED lighting device illustrated in FIG. 3 in that an input current variation step is formed in four steps.

However, the present disclosure is different from the conventional AC source direct driving LED lighting device illustrated in FIG. 3 in that the LED current is concentrated to one 36 V first LED array LA1 to be higher than the input current.

The entire LED power is a value of calculating a product of the voltage and the current of the first LED array LA1, and as illustrated in FIG. 7, the current of the first channel CH1 is the same as the conventional AC source direct driving LED lighting device during the input current driving.

However, when the input current is not driven, it can be seen that while the charges which have been charged in the second to fourth electrolytic capacitors EC2, EC3, and EC4 are discharged, the input current is driven to a pulse type current higher than the currents of three LED arrays LA1, LA2, and LA3 in the conventional AC source direct driving LED lighting device illustrated in FIG. 3.

As such, there is provided an AC source direct driving LED lighting device capable of minimizing the number of connection lines between the light emitting unit and the current driving unit to decrease the volume of the power supply device of the LED driving lighting device and facilitate the component assembling.

Further, there is provided an AC source direct driving LED lighting device capable of stably performing a charging/discharging operation of the LED driving lighting device by decreasing the number of LED arrays in the light emitting unit without reduction of power conversion efficiency.

Through this, there is no need to switch a high current at a high frequency so that the current flows through an inductor, and as a result, as an electromagnetic wave interference phenomenon is prevented, a filter circuit for filtering the high frequency becomes unnecessary.

Further, since a deviation of the lighting-on between LED arrays is removed as compared to the conventional sequential lighting method, the uniformity of the LED lighting is remarkably improved.

## Claims

1. An AC source direct driving LED lighting device comprising:
a light emitting unit (100) comprising an LED array (LA1), a discharge resistor (RC1) and a first electrolytic capacitor (EC1), wherein the light emitting unit (100) is adapted to receive a rectified AC voltage to adjust a first constant current by charging /discharging the first electrolytic capacitor (EC1) through the LED array (LA1);
a charging/discharging unit (200) which is adapted to receive the adjusted first constant current to adjust second to fourth constant currents by charging/discharging embedded second to fourth electrolytic capacitors (EC2, EC3, EC4), respectively;
a discharge LED path unit (300) which is adapted to form a path of discharging the voltage charged in the second to fourth electrolytic capacitors (EC2, EC3, EC4) by coupling one side of the second to fourth electrolytic capacitors to a parallel connection of the LED array (LA1) and the first electrolytic capacitor (EC) of the light emitting unit (100), respectively;
a current driving unit (800) which is adapted to receive the adjusted first to fourth constant currents to form first to fourth channels (CH1, CH2, CH3, CH4) wherein each channel of the first to fourth channels is adapted to receive a respective one of first to fourth reference voltages (REF1, REF2, REF3, REF4) and to control the driving of the adjusted first to fourth constant currents by opening/closing a respective first to fourth transistor, respectively; and
a discharge capacitor path unit (500) forming discharge paths from the second to fourth electrolytic capacitors (EC2, EC3, EC4) to the first channel,
wherein the charging/discharging unit (200) comprises:
a first charging/discharging unit (210) which is adapted to receive the adjusted first constant current to adjust the second constant current by charging/discharging the second electrolytic capacitor (EC2);
a second charging/discharging unit (220) which is adapted to receive the adjusted second constant current to adjust the third constant current by charging/discharging the third electrolytic capacitor (EC3); and
a third charging/discharging unit (230) which is adapted to receive the adjusted third constant current to adjust the fourth constant current by charging/discharging the fourth electrolytic capacitor (EC4),
**characterized in that**
the discharge capacitor path unit (500) comprises:
a first discharge path diode (D31) of which a cathode terminal is connected to another side of the second electrolytic capacitor (EC2) and an anode terminal is connected to an output terminal of the current driving unit (800) to form a discharge path from the second electrolytic capacitor (EC2) to the first channel (CH1) when the second electrolytic capacitor (EC2) is charged with a voltage higher than the voltage of the LED array;
a second discharge path diode (D32) of which a cathode terminal is connected to another side of the third electrolytic capacitor (EC3) and an anode terminal is connected to the output terminal of the current driving unit (800) to form a discharge path from the third electrolytic capacitor (EC3) to the first channel (CH1) when the third electrolytic capacitor (EC3) is charged with a voltage higher than the voltage of the LED array; and
a third discharge path diode (D33) of which a cathode terminal is connected to another side of the fourth electrolytic capacitor (EC4) and an anode terminal is connected to the output terminal of the current driving unit (800) to form a discharge path from the fourth electrolytic capacitor (EC4) to the first channel (CH1) when the fourth electrolytic capacitor (EC4) is charged with a voltage higher than the voltage of the LED array.

2. The AC source direct driving LED lighting device of claim 1, further comprising:
a rectification unit (20) which is adapted to receive and rectify an AC voltage from an AC source (10) to output the rectified AC voltage; and first to fourth isolation diodes (D1, D2, D3, D4) which are adapted to electrically isolate the light emitting unit (100) and the first to third charging/discharging units (210, 220, 230) which are connected in parallel, from each other, respectively.

3. The AC source direct driving LED lighting device of claim 2, wherein the light emitting unit (100) comprises:
the first electrolytic capacitor (EC1) of which the one side is connected to a cathode terminal of the first isolation diode (D1) and the other side is connected to an anode terminal of the second isolation diode (D2) to charge a first charge;
a first discharge resistor (RC1) which is connected to the first electrolytic capacitor (EC1) in parallel to discharge the charged first charge; and
the LED array (LA1) which includes a plurality of LEDs, is connected to the first electrolytic capacitor (EC1) in parallel, and is adapted to receive the rectified AC voltage passing through the first isolation diode to emit light.

4. The AC source direct driving LED lighting device of claim 2, wherein the first charging/discharging unit (210) comprises:
the second electrolytic capacitor (EC2) of which the one side is connected to a cathode terminal of the second isolation diode (D2) to charge a second charge; and a second discharge resistor (RC2) which is connected to the second electrolytic capacitor (EC2) in parallel to discharge the charged second charge.

5. The AC source direct driving LED lighting device of claim 2, wherein the second charging/discharging unit (220) comprises:
the third electrolytic capacitor (EC3) of which the one side is connected to a cathode terminal of the third isolation diode (D3) to charge a third charge; and
a third discharge resistor (RC3) which is connected to the third electrolytic capacitor (EC3) in parallel to discharge the charged third charge.

6. The AC source direct driving LED lighting device of claim 2, wherein the third charging/discharging unit (230) comprises:
the fourth electrolytic capacitor (EC4) of which the one side is connected to a cathode terminal of the fourth isolation diode (D4) to charge a fourth charge; and
a fourth discharge resistor (RC4) which is connected to the fourth electrolytic capacitor (EC4) in parallel to discharge the charged fourth charge.

7. The AC source direct driving LED lighting device of claim 1, further comprising:
a reference voltage generation unit (600) which is adapted to generate and output the first to fourth reference voltages (REF1, REF2, REF3, REF4) that are gradually increasing.

8. The AC source direct driving LED lighting device of claim 7, further comprising a channel isolation unit (400), wherein the channel isolation unit (400) comprises:
a first channel isolation diode (D21) of which an anode terminal is connected to the other side of the second electrolytic capacitor (EC2) and a cathode terminal is connected to an input terminal of the current driving unit (800) to be electrically isolated from the second channel (CH2) based on whether the second electrolytic capacitor (EC2) is discharged;
a second channel isolation diode (D22) of which an anode terminal is connected to the other side of the third electrolytic capacitor (EC3) and a cathode terminal is connected to an input terminal of the current driving unit (800) to be electrically isolated from the third channel (CH3) based on whether the third electrolytic capacitor (EC3) is discharged; and
a third channel isolation diode (D23) of which an anode terminal is connected to the other side of the fourth electrolytic capacitor (EC4) and a cathode terminal is connected to an input terminal of the current driving unit (800) to be electrically isolated from the fourth channel (CH4) based on whether the fourth electrolytic capacitor (EC4) is discharged.

9. The AC source direct driving LED lighting device of claim 8, wherein thecurrent driving unit (800) comprises:a first channel current driving unit (810) which is adapted to receive the adjusted first constant current from the light emitting unit (100) through the first transistor (Q1) to control the driving of the current of the first channel (CH1) according to an opening/closing of the first transistor (Q1) depending on the control of a first comparator (812) of the first channel driving unit (810);
a second channel current driving unit (820) which is adapted to receive the current from the first channel isolation diode (D21) through the second transistor (Q2) to control the driving of the current of the second channel (CH2) according to an opening/closing of the second transistor (Q2) depending on the control of a second comparator (822) of the second channel driving unit (820);
a third channel current driving unit (830) which is adapted to receive the
current from the second channel isolation diode (D22) through the third transistor (Q3) to control the driving of the current of the third channel (CH3) according to an opening/closing of the third transistor (Q3) depending on the control of a third comparator (832) of the third channel driving unit (830); and
a fourth channel current driving unit (840) which is adapted to receive the current from the third channel isolation diode (D23) through the fourth transistor (Q4) to control the driving of the current of the fourth channel (CH4) according to an opening/closing of the fourth transistor (Q4) depending on the control of a fourth comparator (842) of the fourth channel driving unit (840).

10. An AC source direct driving LED lighting device of claims 1 to 9,
wherein the discharge LED path unit (300) comprises:
a first diode (D11) of which an anode terminal is connected to one side of the second electrolytic capacitor (EC2) and a cathode terminal is connected to the light emitting unit (100) to form a path of discharging the voltage, which has been charged in the second electrolytic capacitor (EC2), to the light emitting unit (100);
a second diode (D12) of which an anode terminal is connected to one side of the third electrolytic capacitor (EC3) and a cathode terminal is connected to the light emitting unit (100) to form a path of discharging the voltage, which has been charged in the third electrolytic capacitor (EC3), to the light emitting unit (100); and
a third diode (D13) of which an anode terminal is connected to one side of the fourth electrolytic capacitor (EC4) and a cathode terminal is connected to the light emitting unit (100) to form a path of discharging the voltage, which has been charged in the fourth electrolytic capacitor (EC4), to the light emitting unit (100).

## Patentansprüche

1. LED-Beleuchtungsvorrichtung mit Direktantrieb durch eine Wechselstromquelle, umfassend:
eine Lichtemissionseinheit (100), umfassend eine LED-Anordnung (LA1), einen Entladungswiderstand (RC1) und einen ersten Elektrolytkondensator (EC1), wobei die Lichtemissionseinheit (100) angepasst ist, um eine gleichgerichtete Wechselspannung zu empfangen, um einen ersten konstanten Strom durch Laden/Entladen des ersten Elektrolytkondensators (EC1) durch die LED-Anordnung (LA1) einzustellen;
eine Lade-/Entladeeinheit (200), die angepasst ist, um den eingestellten ersten konstanten Strom zu empfangen, um jeweils einen zweiten bis vierten konstanten Strom durch Laden/Entladen eines eingebetteten zweiten bis vierten Elektrolytkondensators (EC2, EC3, EC4) einzustellen;
eine Entladungs-LED-Pfadeinheit (300), die angepasst ist, um einen Pfad zur Entladung der im zweiten bis vierten Elektrolytkondensator (EC2, EC3, EC4) geladenen Spannung zu bilden, indem eine Seite des zweiten bis vierten Elektrolytkondensators mit einer Parallelschaltung jeweils der LED-Anordnung (LA1) und des ersten Elektrolytkondensators (EC) der Lichtemissionseinheit (100) gekoppelt ist;
eine Stromantriebseinheit (800), die angepasst ist, um den eingestellten ersten bis vierten konstanten Strom zu empfangen, um einen ersten bis vierten Kanal (CH1, CH2, CH3, CH4) zu bilden, wobei jeder Kanal des ersten bis vierten Kanals angepasst ist, um eine jeweilige einer ersten bis vierten Referenzspannung (REF1, REF2, REF3, REF4) zu empfangen und den Antrieb des eingestellten ersten bis vierten konstanten Stroms durch Öffnen/Schließen eines jeweiligen ersten bis vierten Transistors zu steuern; und
eine Entladungskondensator-Pfadeinheit (500), die Entladungspfade vom zweiten bis vierten Elektrolytkondensator (EC2, EC3, EC4) zu dem ersten Kanal ausbildet,
wobei die Lade-/Entladeeinheit (200) umfasst:
eine erste Lade-/Entladeeinheit (210), die angepasst ist, um den eingestellten ersten konstanten Strom zu empfangen, um den zweiten konstanten Strom durch Laden/Entladen des zweiten Elektrolytkondensators (EC2) einzustellen;
eine zweite Lade-/Entladeeinheit (220), die angepasst ist, um den eingestellten zweiten konstanten Strom zu empfangen, um den dritten konstanten Strom durch Laden/Entladen des dritten Elektrolytkondensators (EC3) einzustellen; und
eine dritte Lade-/Entladeeinheit (230), die angepasst ist, um den eingestellten dritten konstanten Strom zu empfangen, um den vierten kontanten Strom durch Laden/Entladen des vierten Elektrolytkondensators (EC4) einzustellen,
**dadurch gekennzeichnet, dass**
die Entladungskondensator-Pfadeinheit (500) umfasst:
eine erste Entladungspfaddiode (D31), von der ein Kathodenanschluss mit einer anderen Seite des zweiten Elektrolytkondensators (EC2) verbunden ist und ein Anodenanschluss mit einem Ausgangsanschluss der Stromantriebseinheit (800) verbunden ist, um einen Entladungspfad von dem zweiten Elektrolytkondensator (EC2) zu dem ersten Kanal (CH1) auszubilden, wenn der zweite Elektrolytkondensator (EC2) mit einer Spannung geladen wird, die höher ist als die Spannung der LED-Anordnung;
eine zweite Entladungspfaddiode (D32), von der ein Kathodenanschluss mit einer anderen Seite des dritten Elektrolytkondensators (EC3) verbunden ist und ein Anodenanschluss mit dem Ausgangsanschluss der Stromantriebseinheit (800) verbunden ist, um einen Entladungspfad von dem dritten Elektrolytkondensator (EC3) zu dem ersten Kanal (CH1) auszubilden, wenn der dritte Elektrolytkondensator (EC3) mit einer Spannung geladen wird, die höher als die Spannung der LED-Anordnung ist; und
eine dritte Entladungspfaddiode (D33), von der ein Kathodenanschluss mit einer anderen Seite des vierten Elektrolytkondensators (EC4) verbunden ist und ein Anodenanschluss mit dem Ausgangsanschluss der Stromantriebseinheit (800) verbunden ist, um einen Entladungspfad von dem vierten Elektrolytkondensator (EC4) zu dem ersten Kanal (CH1) auszubilden, wenn der vierte Elektrolytkondensator (EC4) mit einer Spannung geladen wird, die höher ist als die Spannung der LED-Anordnung.

2. LED-Beleuchtungsvorrichtung mit Direktantrieb durch eine Wechselstromquelle nach Anspruch 1, die ferner Folgendes umfasst:
eine Gleichrichteinheit (20), die angepasst ist, um eine Wechselspannung von einer Wechselstromquelle (10) zu empfangen und gleichzurichten, um die gleichgerichtete Wechselspannung auszugeben; und eine erste bis vierte Isolationsdiode (D1, D2, D3, D4), die angepasst sind, um die Lichtemissionseinheit (100) und die erste bis dritte Lade-/Entladeeinheit (210, 220, 230), die parallel geschaltet sind, jeweils voneinander elektrisch zu isolieren.

3. LED-Beleuchtungsvorrichtung mit Direktantrieb durch eine Wechselstromquelle nach Anspruch 2, wobei die Lichtemissionseinheit (100) umfasst:
den ersten Elektrolytkondensator (EC1), dessen eine Seite mit einem Kathodenanschluss der ersten Isolationsdiode (D1) verbunden ist und dessen andere Seite mit einem Anodenanschluss der zweiten Isolationsdiode (D2) verbunden ist, um eine erste Ladung zu laden;
einen ersten Entladungswiderstand (RC1), der mit dem ersten Elektrolytkondensator (EC1) parallel geschaltet ist, um die geladene erste Ladung zu entladen; und
wobei die LED-Anordnung (LA1), die eine Vielzahl von LEDs beinhaltet, mit dem ersten Elektrolytkondensator (EC1) parallel geschaltet ist und angepasst ist, um die gleichgerichtete Wechselspannung zu empfangen, die durch die erste Isolationsdiode läuft, um Licht zu emittieren.

4. LED-Beleuchtungsvorrichtung mit Direktantrieb durch eine Wechselstromquelle nach Anspruch 2, wobei die erste Lade-/Entladeeinheit (210) umfasst:
den zweiten Elektrolytkondensator (EC2), dessen eine Seite mit einem Kathodenanschluss der zweiten Isolationsdiode (D2) verbunden ist, um eine zweite Ladung zu laden; und einen zweiten Entladungswiderstand (RC2), der mit dem zweiten Elektrolytkondensator (EC2) parallel geschaltet ist, um die geladene zweite Ladung zu entladen.

5. LED-Beleuchtungsvorrichtung mit Direktantrieb durch eine Wechselstromquelle nach Anspruch 2, wobei die zweite Lade-/Entladeeinheit (220) umfasst:
den dritten Elektrolytkondensator (EC3), dessen eine Seite mit einem Kathodenanschluss der dritten Isolationsdiode (D3) verbunden ist, um eine dritte Ladung zu laden; und
einen dritten Entladungswiderstand (RC3), der mit dem dritten Elektrolytkondensator (EC3) parallel geschaltet ist, um die dritte Ladung zu entladen.

6. LED-Beleuchtungsvorrichtung mit Direktantrieb durch eine Wechselstromquelle nach Anspruch 2, wobei die dritte Lade-/Entladeeinheit (230) umfasst:
den vierten Elektrolytkondensator (EC4), dessen eine Seite mit einem Kathodenanschluss der vierten Isolationsdiode (D4) verbunden ist, um eine vierte Ladung zu laden; und
einen vierten Entladungswiderstand (RC4), der mit dem vierten Elektrolytkondensator (EC4) parallel geschaltet ist, um die geladene vierte Ladung zu entladen.

7. LED-Beleuchtungsvorrichtung mit Direktantrieb durch eine Wechselstromquelle nach Anspruch 1, die ferner Folgendes umfasst:
eine Referenzspannungserzeugungseinheit (600), die angepasst ist, um die erste bis vierte Referenzspannung (REF1, REF2, REF3, REF4), die allmählich ansteigen, zu erzeugen und auszugeben.

8. LED-Beleuchtungsvorrichtung mit Direktantrieb durch eine Wechselstromquelle nach Anspruch 7, ferner umfassend eine Kanalisoliereinheit (400), wobei die Kanalisoliereinheit (400) Folgendes umfasst:
eine erste-Kanal-Isolationsdiode (D21), von der ein Anodenanschluss mit der anderen Seite des zweiten Elektrolytkondensators (EC2) verbunden ist und ein Kathodenanschluss mit einem Eingangsanschluss der Stromantriebseinheit (800) verbunden ist, um basierend darauf, ob der zweite Elektrolytkondensator (EC2) entladen ist, elektrisch vom zweiten Kanal (CH2) isoliert zu werden;
eine zweite Kanalisolationsdiode (D22), von der ein Anodenanschluss mit der anderen Seite des dritten Elektrolytkondensators (EC3) verbunden ist und ein Kathodenanschluss mit einem Eingangsanschluss der Stromantriebseinheit (800) verbunden ist, um basierend darauf, ob der dritte Elektrolytkondensator (EC3) entladen ist, von dem dritten Kanal (CH3) elektrisch isoliert zu werden; und
eine dritte Kanalisolationsdiode (D23), von der ein Anodenanschluss mit der anderen Seite des vierten Elektrolytkondensators (EC4) verbunden ist und ein Kathodenanschluss mit einem Eingangsanschluss der Stromantriebseinheit (800) verbunden ist, um basierend darauf, ob der vierte Elektrolytkondensator (EC4) entladen ist, vom vierten Kanal (CH4) elektrisch isoliert zu werden.

9. LED-Beleuchtungsvorrichtung mit Direktantrieb durch eine Wechselstromquelle nach Anspruch 8, wobei die Stromantriebseinheit (800) umfasst: eine erste Kanalstrom-Antriebseinheit (810), die angepasst ist, um den eingestellten ersten konstanten Strom von der Lichtemissionseinheit (100) durch den ersten Transistor (Q1) zu empfangen, um den Antrieb des Stroms des ersten Kanals (CH1) gemäß einem Öffnen/Schließen des ersten Transistors (Q1) in Abhängigkeit von der Steuerung eines ersten Komparators (812) der ersten Kanal-Antriebseinheit (810) zu steuern;
eine zweite Kanalstrom-Antriebseinheit (820), die angepasst ist, um den Strom von der ersten Kanal-Isolationsdiode (D21) durch den zweiten Transistor (Q2) zu empfangen, um den Antrieb des Stroms des zweiten Kanals (CH2) gemäß einem Öffnen/Schließen des zweiten Transistors (Q2) in Abhängigkeit von der Steuerung eines zweiten Komparators (822) der zweiten Kanal-Antriebseinheit (820) zu steuern;
eine dritte Kanalstrom-Antriebseinheit (830), die angepasst ist, um den Strom von der zweiten Kanal-Isolationsdiode (D22) durch den dritten Transistor (Q3) zu empfangen, um den Antrieb des Stroms des dritten Kanals (CH3) gemäß einem Öffnen/Schließen des dritten Transistors (Q3) in Abhängigkeit von der Steuerung eines dritten Komparators (832) der dritten Kanal-Antriebseinheit (830) zu steuern; und
eine vierte Kanalstrom-Antriebseinheit (840), die angepasst ist, um den Strom von der dritten Kanal-Isolationsdiode (D23) über den vierten Transistor (Q4) zu empfangen, um den Antrieb des Stroms des vierten Kanals (CH4) gemäß einem Öffnen/Schließen des vierten Transistors (Q4) in Abhängigkeit von der Steuerung eines vierten Komparators (842) der vierten Kanal-Antriebseinheit (840) zu steuern.

10. LED-Beleuchtungsvorrichtung mit Direktantrieb durch eine Wechselstromquelle nach den Ansprüchen 1 bis 9,
wobei die Entladungs-LED-Pfadeinheit (300) umfasst:
eine erste Diode (D11), von der ein Anodenanschluss mit einer Seite des zweiten Elektrolytkondensators (EC2) verbunden ist und ein Kathodenanschluss mit der Lichtemissionseinheit (100) verbunden ist, um einen Pfad zur Entladung der Spannung, die in dem zweiten Elektrolytkondensator (EC2) geladen wurde, zu der Lichtemissionseinheit (100) zu bilden;
eine zweite Diode (D12), von der ein Anodenanschluss mit einer Seite des dritten Elektrolytkondensators (EC3) verbunden ist und ein Kathodenanschluss mit der Lichtemissionseinheit (100) verbunden ist, um einen Pfad zur Entladung der Spannung, die in dem dritten Elektrolytkondensator (EC3) geladen wurde, zu der Lichtemissionseinheit (100) zu bilden; und
eine dritte Diode (D13), von der ein Anodenanschluss mit einer Seite des vierten Elektrolytkondensators (EC4) verbunden ist und ein Kathodenanschluss mit der Lichtemissionseinheit (100) verbunden ist, um einen Pfad zur Entladung der Spannung, die in dem vierten Elektrolytkondensator (EC4) geladen wurde, zu der Lichtemissionseinheit (100) zu bilden.

## Revendications

1. Dispositif d'éclairage à DEL à commande directe par source de courant alternatif comprenant :
une unité d'émission de lumière (100) comprenant un réseau de DEL (LA1), une résistance de décharge (RC1) et un premier condensateur électrolytique (EC1), dans lequel l'unité d'émission de lumière (100) est adaptée pour recevoir une tension de courant alternatif redressée afin d'ajuster un premier courant constant en chargeant/déchargeant le premier condensateur électrolytique (EC1) à travers le réseau de DEL (LA1);.
une unité de charge/décharge (200) adaptée pour recevoir le premier courant constant ajusté afin d'ajuster des deuxième à quatrième courants constants en chargeant/déchargeant des deuxième à quatrième condensateurs électrolytiques intégrés (EC2, EC3, EC4), respectivement ;
une unité de chemin de décharge de DEL (300) qui est adaptée pour former un chemin de décharge de la tension chargée dans les deuxième à quatrième condensateurs électrolytiques (EC2, EC3, EC4) en couplant un côté des deuxième à quatrième condensateurs électrolytiques à une connexion parallèle du réseau de DEL (LA1) et du premier condensateur électrolytique (EC) de l'unité d'émission de lumière (100), respectivement ;
une unité de commande de courant (800) qui est adaptée pour recevoir les premier à quatrième courants constants ajustés pour former les premier à quatrième canaux (CH1, CH2, CH3, CH4), chaque canal des premier à quatrième canaux étant adapté pour recevoir une des première à quatrième tensions de référence (REF1, REF2, REF3, REF4) et pour commander la commande des premier à quatrième courants constants ajustés en ouvrant/fermant un premier à quatrième transistors respectifs ; et
une unité de chemin de condensateur de décharge (500) formant des chemins de décharge depuis les deuxième à quatrième condensateurs électrolytiques (EC2, EC3, EC4) vers le premier canal,
dans lequel l'unité de charge/décharge (200) comprend :
une première unité de charge/décharge (210) qui est adaptée pour recevoir le premier courant constant ajusté afin d'ajuster le deuxième courant constant en chargeant/déchargeant le deuxième condensateur électrolytique (EC2) ;
une deuxième unité de charge/décharge (220) qui est adaptée pour recevoir le deuxième courant constant ajusté afin d'ajuster le troisième courant constant en chargeant/déchargeant le troisième condensateur électrolytique (EC3) ; et
une troisième unité de charge/décharge (230) qui est adaptée pour recevoir le troisième courant constant ajusté afin d'ajuster le quatrième courant constant en chargeant/déchargeant le quatrième condensateur électrolytique (EC4),
**caractérisé en ce que**
l'unité de chemin de condensateur de décharge (500) comprend :
une première diode de chemin de décharge (D31) dont une borne de cathode est connectée à un autre côté du deuxième condensateur électrolytique (EC2) et dont une borne d'anode est connectée à une borne de sortie de l'unité de commande de courant (800) pour former un chemin de décharge du deuxième condensateur électrolytique (EC2) vers le premier canal (CH1) lorsque le deuxième condensateur électrolytique (EC2) est chargé avec une tension supérieure à la tension du réseau de DEL ;
une deuxième diode de chemin de décharge (D32) dont une borne de cathode est connectée à un autre côté du troisième condensateur électrolytique (EC3) et dont une borne d'anode est connectée à la borne de sortie de l'unité de commande de courant (800) pour former un chemin de décharge du troisième condensateur électrolytique (EC3) vers le premier canal (CH1) lorsque le troisième condensateur électrolytique (EC3) est chargé avec une tension supérieure à la tension du réseau de DEL ; et
une troisième diode de chemin de décharge (D33) dont une borne de cathode est connectée à un autre côté du quatrième condensateur électrolytique (EC4) et dont une borne d'anode est connectée à la borne de sortie de l'unité de commande de courant (800) pour former un chemin de décharge du quatrième condensateur électrolytique (EC4) vers le premier canal (CH1) lorsque le quatrième condensateur électrolytique (EC4) est chargé avec une tension supérieure à la tension du réseau de DEL.

2. Dispositif d'éclairage à DEL à commande directe par source de courant alternatif de la revendication 1, comprenant en outre :
une unité de redressement (20) qui est adaptée pour recevoir et redresser une tension de courant alternatif à partir d'une source de courant alternatif (10) pour émettre la tension de courant alternatif redressée ; et des première à quatrième diodes d'isolation (D1, D2, D3, D4) qui sont adaptées pour isoler électriquement l'unité d'émission de lumière (100) et les première à troisième unités de charge/décharge (210, 220, 230) qui sont connectées en parallèle, les unes des autres, respectivement.

3. Dispositif d'éclairage à DEL à commande directe par source de courant alternatif de la revendication 2, dans lequel l'unité d'émission de lumière (100) comprend :
le premier condensateur électrolytique (EC1) dont l'un côté est connecté à une borne de cathode de la première diode d'isolation (D1) et l'autre côté est connecté à une borne d'anode de la deuxième diode d'isolation (D2) pour charger une première charge;.
une première résistance de décharge (RC1) connectée au premier condensateur électrolytique (EC1) en parallèle pour décharger la première charge ; et
dans lequel le réseau de DEL (LA1) qui comprend une pluralité de DEL, est connectée au premier condensateur électrolytique (EC1) en parallèle, et est adaptée pour recevoir la tension de courant alternatif redressée passant par la première diode d'isolation pour émettre de la lumière.

4. Dispositif d'éclairage à DEL à commande directe par source de courant alternatif de la revendication 2, dans lequel la première unité de charge/décharge (210) comprend:.
le deuxième condensateur électrolytique (EC2) dont l'un côté est connecté à une borne de cathode de la deuxième diode d'isolation (D2) pour charger une deuxième charge ; et une deuxième résistance de décharge (RC2) qui est connectée au deuxième condensateur électrolytique (EC2) en parallèle pour décharger la deuxième charge chargée.

5. Dispositif d'éclairage à DEL à commande directe par source de courant alternatif de la revendication 2, dans lequel la deuxième unité de charge/décharge (220) comprend:.
le troisième condensateur électrolytique (EC3) dont l'un côté est connecté à une borne de cathode de la troisième diode d'isolation (D3) pour charger une troisième charge ; et
une troisième résistance de décharge (RC3) connectée au troisième condensateur électrolytique (EC3) en parallèle pour décharger la troisième charge.

6. Dispositif d'éclairage à DEL à commande directe par source de courant alternatif de la revendication 2, dans lequel la troisième unité de charge/décharge (230) comprend:.
le quatrième condensateur électrolytique (EC4) dont l'un côté est connecté à une borne de cathode de la quatrième diode d'isolation (D4) pour charger une quatrième charge ; et
une quatrième résistance de décharge (RC4) connectée au quatrième condensateur électrolytique (EC4) en parallèle pour décharger la quatrième charge.

7. Dispositif d'éclairage à DEL à commande directe par source de courant alternatif de la revendication 1, comprenant en outre :
une unité de génération de tension de référence (600) qui est adaptée pour générer et émettre les première à quatrième tensions de référence (REF1, REF2, REF3, REF4) qui augmentent progressivement.

8. Dispositif d'éclairage à DEL à commande directe par source de courant alternatif de la revendication 7, comprenant en outre une unité d'isolation de canal (400), l'unité d'isolation de canal (400) comprenant :
une première diode d'isolation de canal (D21) dont une borne d'anode est connectée à l'autre côté du deuxième condensateur électrolytique (EC2) et une borne de cathode est connectée à une borne d'entrée de l'unité de commande de courant (800) pour être isolée électriquement du deuxième canal (CH2) en se basant sur le fait que le deuxième condensateur électrolytique (EC2) est déchargé ou non ;
une deuxième diode d'isolation de canal (D22) dont la borne d'anode est connectée à l'autre côté du troisième condensateur électrolytique (EC3) et dont la borne de cathode est connectée à une borne d'entrée de l'unité de commande de courant (800) pour être isolée électriquement du troisième canal (CH3) en se basant sur la décharge du troisième condensateur électrolytique (EC3) ; et
une troisième diode d'isolation de canal (D23) dont la borne d'anode est connectée à l'autre côté du quatrième condensateur électrolytique (EC4) et dont la borne de cathode est connectée à un terminal d'entrée de l'unité de commande de courant (800) pour être isolée électriquement du quatrième canal (CH4) en se basant sur le fait que le quatrième condensateur électrolytique (EC4) est déchargé ou non.

9. Dispositif d'éclairage à DEL à commande directe par source de courant alternatif de la revendication 8, dans lequel l'unité de commande de courant (800) comprend : une première unité de commande de courant de canal (810) qui est adaptée pour recevoir le premier courant constant ajusté depuis l'unité d'émission de lumière (100) à travers le premier transistor (Q1) pour commander la commande du premier canal (CH1) en fonction d'une ouverture/fermeture du premier transistor (Q1) dépendant de la commande d'un premier comparateur (812) de la première unité de commande de canal (810) ;
une deuxième unité de commande de courant de canal (820) qui est adaptée pour recevoir le courant de la première diode d'isolation de canal (D21) à travers le deuxième transistor (Q2) pour commander la commande du courant du deuxième canal (CH2) selon une ouverture/fermeture du deuxième transistor (Q2) en fonction de la commande d'un deuxième comparateur (822) de la deuxième unité de commande de canal (820) ;
une troisième unité de commande de courant de canal (830), qui est adaptée pour recevoir le courant de la deuxième diode d'isolation de canal (D22) à travers le troisième transistor (Q3) pour commander la commande du courant du troisième canal (CH3) en fonction d'une ouverture/fermeture du troisième transistor (Q3) dépendant de la commande d'un troisième comparateur (832) de la troisième unité de commande de canal (830) ; et
une quatrième unité de commande de courant de canal (840) qui est adaptée pour recevoir le courant de la troisième diode d'isolation de courant (D23) à travers le quatrième transistor (Q4) pour commander la commande du courant du quatrième canal (CH4) en fonction d'une ouverture/fermeture du quatrième transistor (Q4) dépendant de la commande d'un quatrième comparateur (842) de la quatrième unité de commande de canal (840).

10. Dispositif d'éclairage à DEL à commande directe par source de courant alternatif selon les revendications 1 à 9,
dans lequel l'unité de chemin de DEL de décharge (300) comprend :
une première diode (D11) dont une borne d'anode est connectée à un côté du deuxième condensateur électrolytique (EC2) et dont une borne de cathode est connectée à l'unité d'émission de lumière (100) pour former un chemin de décharge de tension, qui a été chargée dans le deuxième condensateur électrolytique (EC2), vers l'unité d'émission de lumière (100) ;
une deuxième diode (D12) dont une borne d'anode est connectée à un côté du troisième condensateur électrolytique (EC3) et dont une borne de cathode est connectée à l'unité d'émission de lumière (100) pour former un chemin de décharge de tension, qui a été chargée dans le troisième condensateur électrolytique (EC3), vers l'unité d'émission de lumière (100) ; et
une troisième diode (D13) dont une borne d'anode est connectée à un côté du quatrième condensateur électrolytique (EC4) et dont une borne de cathode est connectée à l'unité d'émission de lumière (100) pour former un chemin de décharge de tension, qui a été chargée dans le quatrième condensateur électrolytique (EC4), vers l'unité d'émission de lumière (100).
